# DEMANDE DE BREVET EUROPEEN

(11) **EP 0 999 393 A1**
(43) Date de publication de la demande: **10.05.2000**
(21) Numéro de dépôt: 99402578.1
(22) Date de dépôt: 19.10.1999
(51) Int. Cl.: F16L 11/02

(54) **Tuyau flexible obtenu à partir d'un corp creux en fils**

(30) Priorité: 04.11.1998 FR 9813864
(71) Demandeur: Societe Normande de Tuyaux Flexibles, 76170 Lillebonne (FR)
(72) Inventeur: Durand, Marc, 76490 Saint-Arnoult (FR)
(74) Mandataire: Corret, Hélène

(57) **Abrégé**

L'invention concerne un tuyau flexible destiné au transport de fluides, obtenu à partir d'un corps creux se composant d'un assemblage de fils formant une structure tissée, tricotée ou analogue.

Selon l'invention, ce corps creux (1) comprend au moins deux fils différents (10, 11, 12) dont l'un au moins (12) est réalisé en une matière synthétique, dont le point de fusion est inférieur au point de fusion ou de détérioration des autres fils (10, 11). Le tuyau flexible selon l'invention consiste en un tel corps creux (1) dont au moins une partie des fils à bas point de fusion (12) est fondue.

L'invention s'applique aux tuyaux flexibles pour le transport de gaz, notamment pour automobile.

## Description

L'invention est relative à un tuyau flexible pour le transport de fluides, notamment gazeux, ce tuyau étant obtenu à partir d'un corps creux constitué d'un assemblage de fils. L'invention concerne également ce corps creux ainsi qu'un procédé d'obtention de tels tuyaux flexibles.

Des tuyaux flexibles sont notamment utilisés dans l'industrie automobile, par exemple comme conduits d'admission d'air de moteur thermique ou encore comme conduits de ventilation ou de climatisation de l'habitacle d'un véhicule automobile.

Ils sont généralement obtenus par tissage de fils naturels ou synthétiques sur une armature circulaire en fils métalliques.

Grâce à cette armature métallique, le tuyau est relativement flexible axialement, ce qui permet de lui donner une forme particulière. Il présente également une certaine rigidité axiale lui permettant de résister à l'écrasement, par exemple lorsque le tuyau sert de conduits d'aspiration.

Un tuyau de ce type est relativement poreux, grâce à la présence de matériaux fibreux, et il est donc non résonnant du point de vue acoustique.

Ces tuyaux à armature métallique sont largement utilisés, mais ils présentent cependant des inconvénients.

Ils sont tout d'abord d'un prix de revient élevé, du fait de la présence de cette armature métallique. En effet, celle-ci est en elle-même coûteuse. De plus, un tissage circulaire nécessitant l'incorporation d'un fil métallique est relativement difficile et long à mettre en oeuvre. Enfin, lors de la coupe des tuyaux à une longueur déterminée, des opérations de finition manuelles, longues et coûteuses, sont nécessaires.

De plus, la porosité d'un tuyau à armature métallique est maîtrisée au moyen d'une enduction extérieure et/ou intérieure qui est réalisée après le tissage. L'enduction permet également de donner une certaine tenue aux tuyaux après vulcanisation. Cette opération complémentaire d'enduction est également coûteuse et n'est pas toujours facile à réaliser.

L'invention a pour but de pallier ces inconvénients en proposant un tuyau flexible réalisé à partir d'un corps creux qui ne comporte pas nécessairement une armature métallique, tout en présentant une rigidité radiale et une flexibilité axiale appropriées, le tuyau ne nécessitant par ailleurs pas d'enduction pour maîtriser sa porosité.

Ainsi, l'invention concerne tout d'abord un corps creux pour l'obtention d'un tuyau flexible destiné au transport de fluides, ce corps creux se composant d'un assemblage de fils formant une structure tissée, tricotée ou analogue, caractérisé en ce qu'il comprend au moins deux fils différents dont l'un au moins est réalisé en une matière synthétique, dont le point de fusion est inférieur au point de fusion ou de détérioration des autres fils.

De préférence, les fils de l'assemblage sont réalisés en au moins deux matières synthétiques différentes, dont les points de fusion sont différents.

Le point de fusion des fils à plus bas point de fusion est avantageusement inférieur d'au moins 10°C au point de fusion des fils à plus haut point de fusion.

Dans un mode particulier de réalisation, au moins un fil de l'assemblage est réalisé en un mélange de fibres de natures différentes.

Dans un mode de réalisation, les fils de l'assemblage sont tissés, les fils de trame étant réalisés au moins partiellement en une matière synthétique dont le point de fusion est inférieur à celui d'au moins une partie de fils de chaîne.

De préférence, les fils de trame sont répartis selon deux hélices de fils de matières différentes, dont les points de fusion sont avantageusement différents.

La distance entre les deux hélices de trame est avantageusement comprise entre environ 0,1 et 6 millimètres et, de préférence, entre 0,5 et 2 millimètres.

Dans un exemple particulier de réalisation du corps creux selon l'invention, les fils de trame sont en polyester et en polypropylène ou polyéthylène, tandis que les fils de chaîne sont en polyester.

Le poids des fils de trame en polypropylène ou polyéthylène est avantageusement compris entre environ 1 et 4 ktex et, de préférence, égal à 2 ktex.

De plus, la masse surfacique des fils de chaîne en polyester est avantageusement comprise entre environ 340 et 1300 g/m² et de préférence, égale à 680 g/m².

Enfin, le diamètre des fils de trame en polyester est avantageusement compris entre environ 0,8 et 2 millimètres.

L'invention concerne également un tuyau flexible destiné au transport de fluides qui est constitué par un corps creux selon l'invention, dont au moins une partie des fils à bas point de fusion est fondue.

L'invention concerne aussi un procédé d'obtention d'un tuyau flexible destiné au transport de fluides, consistant :
- à réaliser un corps creux présentant les caractéristiques de l'invention et
- à chauffer ce corps creux pour obtenir la fusion d'au moins une partie des fils à bas point de fusion, de telle sorte que ces fils adhèrent à au moins une partie des autres fils du corps creux pour conférer au tuyau la porosité, la rigidité radiale ainsi que la flexibilité axiale souhaitée.

Dans un mode particulier de mise en oeuvre de ce procédé, le corps creux est obtenu par tissage circulaire.

Le procédé selon l'invention consiste également, avant ou après l'étape de chauffage du corps creux, à découper celui-ci à chaud, à une longueur déterminée, cette découpe étant effectuée à une température suffisante pour provoquer, à une extrémité du corps creux ou du tuyau, la fusion des fils à bas point de fusion qui adhèrent sur d'autres fils du corps creux ou du tuyau.

L'invention sera mieux comprise et d'autres buts, avantages et caractéristiques de celle-ci apparaîtront plus clairement à la lecture de la description qui suit et qui est faite en référence aux dessins annexés, sur lesquels.
La figure 1 est une vue partiellement en coupe d'un corps creux selon l'invention ;
La figure 2 est une vue agrandie du détail A de la figure 1.
La figure 3 est une vue similaire à la figure 2, illustrant le corps creux après fusion d'une partie des fils, pour obtenir un tuyau destiné au transport de fluides.

Les éléments communs aux différentes figures seront désignés par les mêmes références.

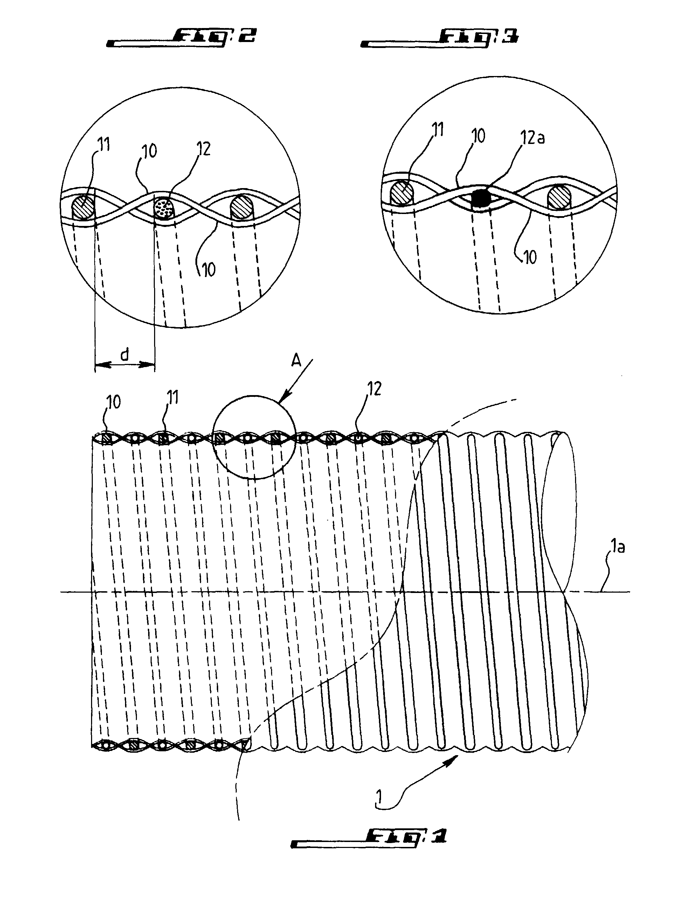

La figure 1 illustre en coupe partielle un corps creux selon l'invention destiné à l'obtention d'un tuyau flexible pour le transport de fluides.

Ce corps creux 1 est ici obtenu par tissage circulaire de fils. Cependant, l'invention n'est pas limitée à ce mode de réalisation et le corps creux selon l'invention peut être constitué par tout assemblage de fils et notamment par une structure tricotée, tressée ou analogue.

Il se présente sous la forme d'un tube d'axe 1a.

Les fils de chaîne portent la référence 10. Les fils de trame sont répartis selon deux hélices de fils qui sont, dans ce mode de réalisation, de nature différente. Les fils de trame de nature différente portent respectivement les références 11 et 12.

Les fils constituant le corps creux 1 peuvent être réalisés en matière synthétique ou naturelle et ne sont pas nécessairement des fils métalliques. Ainsi, le corps 1 peut être exclusivement constitué par des fils synthétiques ou naturels.

Il est nécessaire que le corps creux 1 comporte au moins deux fils différents, au moins l'un d'entre eux étant réalisé en une matière synthétique, dont le point de fusion est inférieur au point de fusion ou de détérioration des autres fils.

Le point de détérioration doit être ici compris comme la température à laquelle une fibre naturelle ou métallique peut se dégrader et notamment s'enflammer ou fondre.

Dans l'exemple représenté sur les figures, le corps creux 1 comporte deux fils de trame de nature différente. Cependant, l'invention n'est pas limitée à ce mode de réalisation, tous les fils de trame pouvant être de même nature ou encore en plus de deux matières différentes.

Il est cependant nécessaire, pour un corps creux tissé, qu'au moins une partie des fils de trame soit réalisée en une matière synthétique dont le point de fusion est inférieur à au moins une partie des fils de chaîne 10. Comme on le verra dans la suite de la description, ceci est nécessaire pour conférer une rigidité radiale au tuyau flexible obtenu à partir de ce corps creux.

Dans l'exemple illustré sur les figures, les fils de chaîne 10 et les fils de trame 11 sont en polyester, tandis que les fils de trame 12 sont en polypropylène ou polyéthylène.

Par ailleurs, de préférence, les fils de trame en polyester se présentent sous la forme d'un jonc, tandis que les fils de trame en polypropylène ou en polyéthylène et les fils de chaîne en polyester sont des fils multibrins.

Les fils de trame et de chaîne ne sont pas nécessairement formés en une matière unique.

En particulier, les fils de chaîne peuvent être réalisés en un mélange de fibres de polyester et de polypropylène ou encore de polyester et de lin. Un choix approprié de ces mélanges permet de contribuer à la rigidité radiale du tuyau obtenu à partir du corps creux selon l'invention. De même, chaque fil de trame 11 et 12 peut être réalisé en un mélange de fibres de matières différentes.

Une fois que le corps 1 est réalisé, il est chauffé à une température appropriée pour provoquer la fusion des fils dont le point de fusion est le plus bas, les autres fils du corps 1 n'étant pas modifiés.

De façon connue, la température de fusion des fils de polyéthylène haute densité est comprise entre 120 et 135°C, celle des fils de polypropylène entre 150 et 176°C, et celle des fils de polyester entre 225 et 255°C.

Ainsi, pour un corps creux tel que celui illustré sur les figures et comprenant des fils de trame en polyester et en polypropylène et des fils de chaîne en polyester, il suffit de chauffer le corps 1 à une température comprise entre 150 et 176°C pour provoquer la fusion des fils de trame 12a en polypropylène qui vont alors se coller sur les fils de chaîne 10 en polyester.

Comme mentionné ci-dessus, les fils de trame 12 sont de préférence des fils multibrins, car la fusion de tels fils est plus facile à obtenir.

A cette température de fusion des fils de trame 12, les fils de polyester 10 et 11 ne sont pas modifiés.

Ainsi, comme l'illustre la figure 3, les fils de trame 12a adhèrent aux fils de chaîne 10 et pénétrent même en partie dans ces fils de chaîne multibrins, ce qui n'est pas le cas des fils de trame 11.

Cette adhérisation des fils de trame 12a sur les fils de chaîne 10 donne au tuyau une rigidité radiale appropriée, comme celle qui est obtenue avec un tuyau classique comportant une armature métallique.

Ainsi, sous une dépression de 25 millibars, la section d'un tuyau flexible selon l'invention est réduite au maximum de 20 %.

Par ailleurs, même si tous les fils de trame sont constitués en un matériau à bas point de fusion, le tuyau conserve une certaine flexibilité.

Cependant, cette flexibilité est plus importante lorsque le tuyau est réalisé à partir d'un corps creux comportant des fils de trame dont les points de fusion sont différents. En effet, en se référant à la figure 3 qui montre que les fils de trame 11 ne sont pas collés aux fils de chaîne 10, on comprend que les fils de chaîne peuvent glisser sur ces fils de trame 11, ce qui accroît la flexibilité du tuyau. Cependant, cette flexibilité axiale n'altère pas la rigidité radiale du tuyau qui est obtenue par la fusion des fils de trame 12 et leur adhérisation sur les fils de chaîne 10.

Ainsi, la présence de fils à bas point de fusion dans le corps creux et leur présence à l'état fondu dans le tuyau flexible suffisent à conférer à celui-ci une rigidité radiale appropriée et ceci, sans que le tuyau flexible ne comporte une armature ou un renfort métallique.

Comme indiqué ci-dessus, les fils de trame 11 se présentent de préférence sous la forme d'un jonc, ce qui contribue également à la flexibilité du tuyau obtenu à partir du corps creux selon l'invention.

Par ailleurs, le diamètre des fils de trame 11 de polyester est de préférence compris entre environ 0,8 et 2 millimètres. Dans cette gamme de valeurs, les fils de trame 11 occupent un volume approprié entre les fils de chaîne 10 pour contribuer à la flexibilité axiale du tuyau flexible obtenu à partir du corps creux 1.

Pour que le procédé d'obtention d'un tuyau flexible selon l'invention, par chauffage d'un corps creux 1, soit facile à mettre en oeuvre, il est préférable que le point de fusion des fils à plus bas point de fusion soit inférieur d'au moins 10°C au point de fusion des fils à plus haut point de fusion. En effet, il n'est alors pas nécessaire de disposer d'un matériel de chauffe très précis.

Les essais qui ont été effectués ont montré que le tuyau flexible selon l'invention présente une porosité telle que ses propriétés acoustiques sont tout à fait satisfaisantes et comparables à celles des tuyaux flexibles classiques.

Lorsqu'un tuyau flexible selon l'invention est obtenu à partir d'un corps 1 tel qu'illustré aux figures 1 et 2, il est également possible de maîtriser la porosité et la flexibilité de ce tuyau, en modifiant la distance d entre les deux hélices de fils de trame 11 et 12, dans le corps creux.

Les essais effectués ont montré qu'une porosité et une flexiblité satisfaisantes du tuyau flexible sont obtenues lorsque la distance d entre les deux hélices de trame du corps creux 1 est comprise entre environ 0,1 et 6 millimètres et, de préférence, entre 0,5 et 2 millimètres.

De préférence, le poids du fil de trame 12 en polypropylène ou polyéthylène, dans le corps 1, est compris entre environ 1 et 4 ktex, et il est avantageusement égal à 2 ktex. Dans cette gamme de valeurs, le jonc obtenu après fusion dans le tuyau flexible, présente un diamètre moyen approprié pour assurer son adhérisation sur les fils de chaîne 10. Ceci contribue à assurer la rigidité radiale du tuyau flexible.

Enfin, la masse surfacique des fils de chaîne 10 en polyester est de préférence comprise entre environ 340 et 1300 g/m² et elle est avantageusement égale à 680 g/m². On a pu constater que, dans cette gamme de valeurs, les fils de chaîne contribuent à ce que le tuyau flexible selon l'invention présente de bonnes caractéristiques acoustiques.

De plus, les fils de chaîne du type multibrins contribuent également aux bonnes propriétés acoustiques du tuyau selon l'invention.

La description qui précède montre que le tuyau flexible selon l'invention, obtenu à partir d'un corps creux ne comportant pas nécessairement d'armature métallique, présente une flexibilité axiale et une rigidité radiale appropriées ainsi que de bonnes caractéristiques acoustiques.

Ces caractéristiques acoustiques sont obtenues sans qu'il soit nécessaire de procéder à une enduction ultérieure du tuyau flexible, contrairement aux tuyaux flexibles classiques à armature métallique notamment.

Le tuyau flexible selon l'invention comporte encore un avantage par rapport aux tuyaux flexibles classiques à armature métallique, lors de sa coupe.

En effet, le corps 1 est fabriqué de façon continue et il est nécessaire de procéder à une opération de coupe pour obtenir un tuyau flexible de longueur appropriée. Cette opération de coupe peut être effectuée sur le corps creux lui-même avant fusion des fils à bas point de fusion, ou encore sur le tuyau obtenu après fusion de ces fils.

La coupe est effectuée à chaud, à une température suffisante pour provoquer la fusion des fils à bas point de fusion, au niveau d'une extrémité du corps creux ou du tuyau. Ainsi, la coupe du corps creux ou du tuyau provoque la fusion et l'adhésion des fils à bas point de fusion sur les autres fils à cette extrémité, ce qui évite l'effilochage du corps creux ou du tuyau. Il n'est donc plus nécessaire de procéder à des opérations de finition, comme sur les tuyaux flexibles classiques à armature métallique.

Dans la description qui précède, le tuyau flexible selon l'invention est réalisé, sur toute sa longueur, avec un assemblage identique de fils. Cependant, on peut également prévoir des assemblages différents de fils sur la longueur du tuyau, notamment pour que celui-ci présente une partie plus rigide.

De plus, le corps creux illustré sur les figures 1 et 2 présente une forme tubulaire. Ce corps peut également être réalisé à plat, notamment par tissage, le tuyau obtenu à partir de ce corps pouvant ensuite prendre une forme souhaitée, après chauffage sur un mandrin de forme appropriée.

Le corps creux et le tuyau selon l'invention peuvent néanmoins comporter un fil métallique qui peut notamment constituer un renfort supplémentaire, par exemple pour accroitre la rigidité radiale du tuyau sur une longueur déterminée. Ce fil peut également être mélangé à un fil de l'assemblage à bas point de fusion, par exemple un fil multibrins de polypropylène, et être utilisé pour chauffer par induction le fil à bas point de fusion.

Les fils métalliques utilisés sont alors, de façon générale, d'un diamètre très inférieur à celui des fils formant l'armature métallique d'un tuyau flexible classique.

L'invention n'est pas limitée aux différents modes de réalisation qui viennent d'être décrits et elle comprend tous leurs équivalents techniques, ainsi que leurs combinaisons si celles-ci entrent dans le cadre des revendications.

Enfin, les signes de référence insérés après les caractéristiques techniques figurant dans les revendications ont pour seul but de faciliter la compréhension de ces dernières et ne sauraient en limiter la portée.

## Revendications

1. Tuyau flexible destiné au transport de fluides, formé d'un corps creux se composant d'un assemblage de fils formant une structure tissée, tricotée ou analogue, et comprenant au moins deux fils différents (10, 11, 12) dont l'un au moins est réalisé en une matière synthétique, dont le point de fusion est inférieur au point de fusion ou de détérioration des autres fils, caractérisé en ce qu'au moins une partie des fils à bas point de fusion est fondue.

2. Tuyau flexible selon la revendication 1, caractérisé en ce que les fils de l'assemblage (10, 11, 12) sont réalisés en au moins deux matières synthétiques différentes, dont les points de fusion sont différents.

3. Tuyau flexible selon la revendication 1 ou 2, caractérisé en ce que le point de fusion des fils à plus bas point de fusion est inférieur d'au moins 10°C au point de fusion des fils à plus haut point de fusion.

4. Tuyau flexible selon l'une des revendications 1 à 3, caractérisé en ce qu'au moins un fil de l'assemblage est réalisé en un mélange de fibres de natures différentes.

5. Tuyau flexible selon l'une des revendications 1 à 4, caractérisé en ce que les fils de l'assemblage (10, 11, 12) sont tissés, les fils de trame (11, 12) étant réalisés au moins partiellement en une matière synthétique dont le point de fusion est inférieur à celui d'au moins une partie des fils de chaîne (10).

6. Tuyau flexible selon la revendication 5, caractérisé en ce que les fils de trame sont répartis selon deux hélices de fils (11, 12) de matières différentes, dont les points de fusion sont de préférence différents.

7. Tuyau flexible selon la revendication 5 ou 6, caractérisé en ce que la distance entre les deux hélices de trame est comprise entre 0,1 et 6 millimètres et, de préférence, entre 0,5 et 2 millimètres.

8. Tuyau flexible selon l'une des revendications 5 à 7, caractérisé en ce que les fils de trame sont des fils de polyester (11) et des fils de polypropylène ou polyéthylène (12), tandis que les fils de chaîne (10) sont des fils de polyester.

9. Tuyau flexible selon la revendication 8, caractérisé en ce que le poids des fils de trame (12) en polypropylène ou polyéthylène est compris entre 1 et 4 ktex et, de préférence, égal à 2 ktex.

10. Tuyau flexible selon la revendication 8 ou 9, caractérisé en ce que la masse surfacique des fils de chaîne en polyester (10) est comprise entre 340 et 1300 g/m² et, de préférence, égale à 680 g/m².

11. Tuyau flexible selon l'une des revendications 5 à 10, caractérisé en ce que le diamètre des fils de trame en polyester (10) est compris entre 0,8 et 2 millimètres.

12. Procédé d'obtention d'un tuyau flexible pour le transport de fluides, consistant :
- à réaliser un corps creux (1) se composant d'un assemblage de fils formant une structure tissée, tricotée ou analogue, et comprenant au moins deux fils différents (10, 11, 12) dont l'un au moins est réalisé en une matière synthétique, dont le point de fusion est inférieur au point de fusion ou de détérioration des autres fils ; et
- à chauffer ledit corps creux (1) pour obtenir la fusion d'au moins une partie des fils à bas point de fusion (12), de telle sorte que les fils à bas point de fusion adhèrent à au moins une partie des autres fils du corps creux pour conférer au tuyau flexible la porosité, la rigidité radiale et la flexibilité axiale souhaitées.

13. Procédé selon la revendication 12, dans lequel ledit corps creux (1) est obtenu par tissage circulaire.

14. Procédé selon la revendication 12 ou 13 dans lequel, avant ou après l'étape de chauffage du corps creux (1), celui-ci est découpé à chaud, à une longueur déterminée, la découpe étant effectuée à une température suffisante pour provoquer, à une extrémité du corps creux ou du tuyau, la fusion des fils à bas point de fusion qui adhèrent sur d'autres fils du corps creux ou du tuyau.
